(19) Europäisches Patentamt
European Patent Office
Office européen des brevets

(11) **EP 2 267 408 B1**

(12) **FASCICULE DE BREVET EUROPEEN**

(45) Date de publication et mention de la délivrance du brevet:
**06.06.2012 Bulletin 2012/23**

(51) Int Cl.:
***G01C 19/66*** *(2006.01)*

(21) Numéro de dépôt: **10166563.6**

(22) Date de dépôt: **18.06.2010**

(54) **Gyrolaser à état solide stabilisé**

Stabilisiert Festkörperlaserkreisel

Stabilised solid-state gyrolaser

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **22.06.2009 FR 0903013**

(43) Date de publication de la demande:
**29.12.2010 Bulletin 2010/52**

(73) Titulaire: **THALES**
**92200 Neuilly-sur-Seine (FR)**

(72) Inventeurs:
• **Gutty, François**
**Chatellerault, 86100 (FR)**

• **Schwartz, Sylvain**
**78470, Saint-remy Les Chevreuse (FR)**
• **Pocholle, Jean-Paul**
**91290, La Norville (FR)**
• **Feugnet, Gilles**
**91120, Palaiseau (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**FR-A1- 2 853 061     FR-A1- 2 863 702**

**Description**

Domaine technique

Le domaine de l'invention est celui des gyrolasers à état solide utilisés pour la mesure des vitesses de rotation ou des déplacements angulaires relatifs. On appelle déplacement angulaire relatif, exprimé en degrés, l'intégrale dans le temps de la vitesse de rotation dudit mobile. Ce type d'équipement est notamment utilisé pour les applications aéronautiques.

Le gyrolaser, mis au point il y a une trentaine d'années, est largement commercialisé et utilisé de nos jours. Son principe de fonctionnement est fondé sur l'effet Sagnac, qui induit une différence de fréquence $\Delta vs$ entre les deux modes optiques d'émission se propageant en sens opposé, dits contre-propageants, d'une cavité laser en anneau bidirectionnelle animée d'un mouvement de rotation. Classiquement, la différence de fréquence $\Delta vs$ est donnée par l'équation suivante :

$$\Delta vs = 4A\omega/\lambda L \qquad (A)$$

où L et A sont respectivement la longueur et l'aire de la cavité ; $\lambda$ est la longueur d'onde d'émission laser hors effet Sagnac ; $\omega$ est la vitesse de rotation de l'ensemble.

La mesure de la différence de fréquence entre les deux modes optiques $\Delta vs$ est obtenue par analyse spectrale du battement des deux faisceaux émis. Elle permet de connaître la valeur de $\omega$ avec une très grande précision.

Art antérieur

La condition d'observation du battement est la stabilité et la relative égalité des intensités émises dans les deux directions. Son obtention n'est pas à priori chose aisée en raison du phénomène de compétition entre modes qui fait que l'un des deux modes contre-propageants peut avoir tendance à monopoliser le gain disponible, au détriment de l'autre mode.

Ce problème est résolu dans les gyrolasers à état solide en introduisant dans la cavité des pertes optiques dépendantes du sens de propagation du mode optique et de son intensité. Le principe est de moduler par un dispositif de contre-réaction ces pertes en fonction de la différence d'intensité entre les deux modes émis afin de favoriser le mode le plus faible au détriment de l'autre de façon à constamment maintenir l'équilibre entre les deux modes contre-propageants.

Dans la demande de brevet FR0303645 déposée par la demanderesse, il a été proposé un dispositif stabilisateur pour gyrolaser à état solide, qui est constitué d'un système de contre-réaction infligeant des pertes optiques dépendant du sens de propagation en se fondant sur la combinaison de trois effets physiques : la rotation réciproque, la rotation non réciproque et la polarisation.

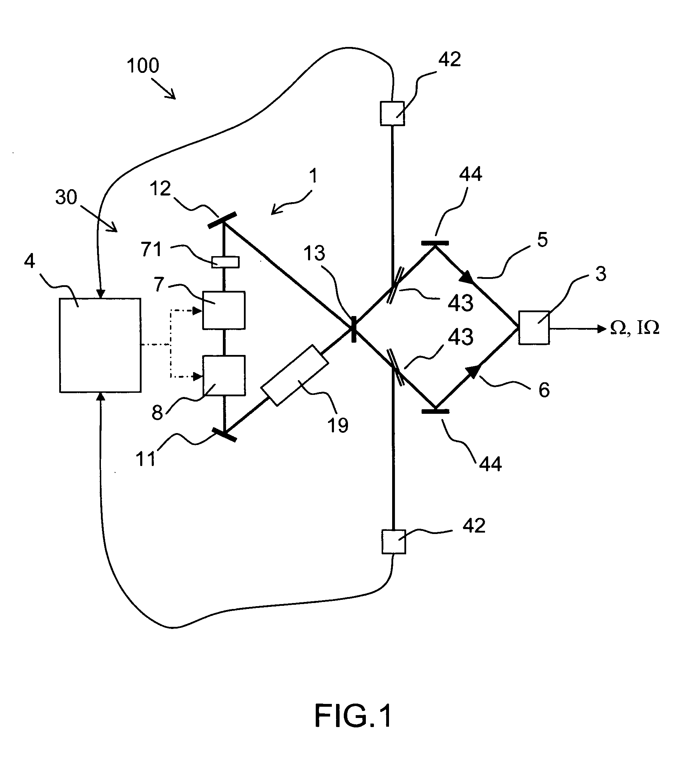

La figure 1 représente le schéma d'ensemble d'un gyrolaser 100 selon l'art antérieur. Il comprend une cavité 1 en anneau constituée d'au moins trois miroirs 11, 12 et 13, d'un milieu amplificateur 19 à l'état solide et d'un dispositif de stabilisation des intensités 30 comprenant un élément polarisant 71, d'un dispositif 7 à effet réciproque agissant sur l'état de polarisation des modes contre-propageants et un dispositif 8 à effet non réciproque agissant également sur l'état de polarisation des modes contre-propageants, au moins l'un des effets desdits dispositifs étant réglable. Les ensembles 71, 7 et 8 sont disposés sur les trajets des faisceaux contre-propageants. Le gyrolaser comportant un milieu amplificateur 19 à l'état solide est dit gyrolaser à état solide.

Il y a effet optique non réciproque dans un composant optique lorsque, la lumière ayant un état de polarisation initial, l'état de polarisation de la lumière est différent de cet état initial après un aller-retour dans ledit composant. Ainsi, le même faisceau venant en sens inverse dans un rotateur optique non-réciproque subira une rotation de sa direction de polarisation dans le même sens. Il y a effet optique réciproque dans un composant optique lorsque, la lumière ayant un état de polarisation initial, l'état de polarisation de la lumière est identique à cet état initial après un aller-retour dans le composant.

A la sortie de la cavité, les deux modes optiques 5 et 6 sont superposés par un moyen de superposition 44 pour donner un signal utile Su, composant le battement des deux modes contre-propageants, dont la fréquence $\Delta vmes$ est égale à la différence de fréquence entre les deux modes optiques. Le gyrolaser comprend également un moyen de détermination d'une mesure de rotation du gyrolaser 3. Par mesure de la rotation du gyrolaser, on entend la mesure d'une grandeur représentant la rotation du gyrolaser. Il s'agit par exemple d'une mesure de la vitesse de rotation $\Omega$ du gyrolaser (exprimée en rad.s$^{-1}$) ou d'une mesure du déplacement angulaire relatif I$\Omega$ du gyrolaser (correspondant à l'intégrale de la vitesse de rotation dans le temps) exprimée en rad. Ce moyen de mesure 3 comprend par exemple une photodiode apte à mesurer la différence de fréquence $\Delta vmes$ entre les deux modes. La vitesse de rotation $\Omega$ du gyrolaser 100 est calculée à partir de la différence de fréquence mesurée $\Delta vmes$ en se basant sur l'équation A.

En variante, le moyen 3 comprend un moyen de mesure de la vitesse et du sens de rotation à partir du nombre de franges (lié à la différence de fréquence entre les deux modes) défilant dans un sens et dans l'autre. Ce moyen 3 comporte par exemple deux photodiodes disposées en quadrature par rapport aux franges du signal de battement.

Le déplacement angulaire est calculé en intégrant sur le temps la mesure de la vitesse de rotation.

Dans le calcul de la mesure de rotation du gyrolaser de l'art antérieur, on suppose que la différence de fréquence entre les deux modes contre-propageants et uniquement due à la rotation du gyrolaser (effet Sagnac.)

Une partie de ces faisceaux 5 et 6 est prélevée au moyen des deux lames semi-réfléchissantes 43 et envoyée sur deux photodétecteurs 42. L'intensité des faisceaux 5 et 6 peut être également mesurée directement en sortie de cavité, en utilisant un deuxième coupleur de sortie (le premier servant dans ce cas exclusivement à la mesure du signal de battement).

Les signaux issus de ces deux photodétecteurs sont représentatifs de l'intensité lumineuse des deux modes optiques contre-propageants 5 et 6. Ces signaux sont envoyés à un module électronique de contre-réaction 4 qui pilote, en fonction de l'intensité des signaux reçus, le dispositif à effet variable (flèches en pointillés sur le schéma). Cela va se traduire, en conjonction avec le dispositif polarisant 71, par des variations des états de polarisation des deux faisceaux contre-propageants. Ces variations d'état de polarisation entraînent ainsi des pertes optiques différentes sur les modes optiques contre-propageants 5 et 6. Si l'un des faisceaux a une intensité lumineuse supérieure à l'autre, son intensité sera plus atténuée, de façon à ramener les faisceaux de sortie au même niveau d'intensité. On stabilise ainsi le régime bidirectionnel en intensité et on obtient une émission bidirectionnelle stable et équilibrée.

### Inconvénients de l'art antérieur

L'inconvénient principal de l'art antérieur est l'existence d'un biais sur la mesure de rotation du gyrolaser, ce biais étant induit par le dispositif de stabilisation des intensités.

### But de l'invention

Le but de l'invention est de limiter ce biais.

L'invention a pour objet un gyrolaser à état solide comportant au moins une cavité optique dans lequel deux modes optiques dits contre-propageants peuvent se propager en sens inverse l'un de l'autre, un dispositif de stabilisation des intensités permettant de maintenir l'équilibre des deux modes contre-propageants comportant au moins, à l'intérieur de la cavité, un ensemble optique comprenant un élément polarisant, un dispositif à effet non réciproque agissant sur l'état de polarisation des modes contre-propageants, un dispositif à effet réciproque agissant également sur l'état de polarisation des modes contre-propageants, le dispositif de stabilisation des intensités comportant des moyens de réglage permettant, en établissant une commande de réglage, de régler au moins l'un des effets desdits dispositifs à effet réciproque ou à effet non réciproque, ledit gyrolaser comprenant en outre un moyen de calcul d'une mesure de rotation dudit gyrolaser à partir des modes optiques dits contre-propageants présentant entre eux une différence de fréquence, le moyen de calcul d'une mesure de rotation calculant une mesure de rotation en supposant que la différence de fréquence entre les deux modes contre-propageants est induite uniquement par la rotation de la cavité, comprenant en outre :

- un moyen pour mesurer la commande de réglage,
- un moyen pour mémoriser un modèle de comportement d'un biais en fréquence induit par le dispositif de stabilisation des intensités en fonction de la commande de réglage,
- un moyen pour calculer le biais en fréquence induit par le dispositif de stabilisation des intensités à partir de la valeur de la commande de réglage et du modèle,
- un moyen pour calculer le biais sur la mesure de rotation induit par le biais en fréquence,
- un moyen pour compenser le biais sur la mesure de rotation.

Le gyrolaser selon l'invention peut présenter en outre, une ou plusieurs des caractéristiques suivantes prises ensemble ou séparément :

- la mesure de rotation est une mesure de du déplacement angulaire relatif dudit gyrolaser,
- la mesure de rotation est une mesure de la vitesse de rotation dudit gyrolaser,
- le modèle de comportement du biais en fréquence en fonction de la commande de réglage est un modèle linéaire,
- le modèle de comportement du biais en fonction de la commande de réglage est une table répertoriant une pluralité de valeurs du biais en fréquence en fonction de la valeur de la commande de réglage,
- il comprend en outre un moyen pour mesurer la température en au moins un point de la cavité,
- le moyen pour mesurer la température est apte à mesurer une température avec une erreur inférieure à 5°C,
- le modèle est en outre fonction de la température en un ou plusieurs points de la cavité,
- le moyen pour mesurer la commande de réglage mesure la commande de réglage avec une erreur relative inférieure ou égale à $10^{-4}$,
- le moyen pour mesurer la commande de réglage est un moyen de mesure d'une intensité,
- le moyen pour mesurer la commande de réglage est un moyen de mesure d'une tension.

### Avantages de l'invention

On limite ainsi le biais induit par le dispositif de stabilisation et par conséquent on améliore la précision d'un gyrolaser équipé d'un système de stabilisation des intensités infligeant des pertes optiques dépendant du sens de propagation.

### Principe de fonctionnement d'un gyrolaser

Le gyrolaser selon l'invention se fonde sur le fait que la mise en rotation de la cavité induit une différence de fréquence entre les deux modes contre-propageants, ce qui est équivalent à une différence de longueur de parcours entre ces deux modes. En effet, dans un laser, le déphasage d'un faisceau sur le trajet qu'il effectue dans la cavité doit être un multiple de $2\pi$. C'est une condition d'émission du laser. Cette contrainte est exprimée de la façon suivante :

$$\nu = p^*c/L$$

où c est la célérité de la lumière et c/L est l'intervalle spectral libre ISL du laser et p est un nombre entier fixé pour un laser donné. L est la distance parcourue par un faisceau dans la cavité, cette distance est classiquement égale à la longueur optique de la cavité.

La fréquence du faisceau étant inversement proportionnelle à la longueur parcourue par le faisceau dans la cavité, la relation suivante est vérifiée :

$$\frac{\Delta L}{L} = \frac{\Delta \nu}{\nu}$$

C'est-à-dire :

$$\Delta L = \frac{\Delta \nu L}{\nu} = \frac{\Delta \nu}{pc} \qquad (B)$$

Où $\Delta L$ est une variation de longueur effective de parcours d'un faisceau et $\Delta \nu$ est la variation de fréquence induite par cette variation de longueur de parcours effective.

Or, dans un gyrolaser, l'effet Sagnac induit une différence de fréquence $\Delta \nu$ entre les deux modes optiques d'émission contre-propageants donnés par l'équation A. On en déduit que l'effet Sagnac induit une différence de longueur effective du trajet parcouru au sein de la cavité entre les deux modes optiques d'émission se propageant en sens opposé. Cette première différence de longueur effective de parcours $\Delta Ls$ est définie comme suit à partir des équations A et B :

$$\Delta Ls = \frac{4A\omega}{\lambda pcL} = \frac{\Delta \nu s}{pc}$$

où $\Delta \nu s$ et $\Delta Ls$ sont respectivement la différence de fréquence et la différence de longueur effective de parcours induites par l'effet Sagnac entre les deux modes contre-propageants.

Description détaillée de l'invention

L'invention sera mieux comprise et d'autres avantages apparaîtront à la lecture de la description qui va suivre donnée à titre non limitatif et grâce aux figures annexées parmi lesquelles:

- la figure 1 représente un gyrolaser selon l'art antérieur,
- la figure 2 représente le schéma général d'un gyrolaser selon l'invention,
- la figure 3 représente le principe général du dispositif permettant d'induire des pertes dépendantes du sens de propagation selon l'invention,

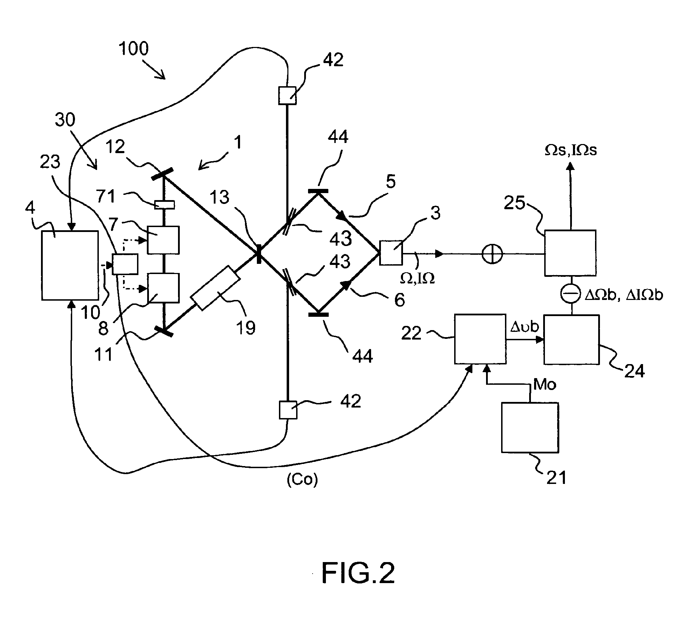

Le gyrolaser selon l'invention est représenté sur la figure 2. Les éléments communs aux figures 1 et 2 (et également 3) sont désignés par les mêmes références numériques et ne seront pas décrits à nouveau. On va maintenant tenter de donner une description imagée pour expliquer l'origine du biais induit par le système de stabilisation des intensités sur une mesure de sortie du gyrolaser.

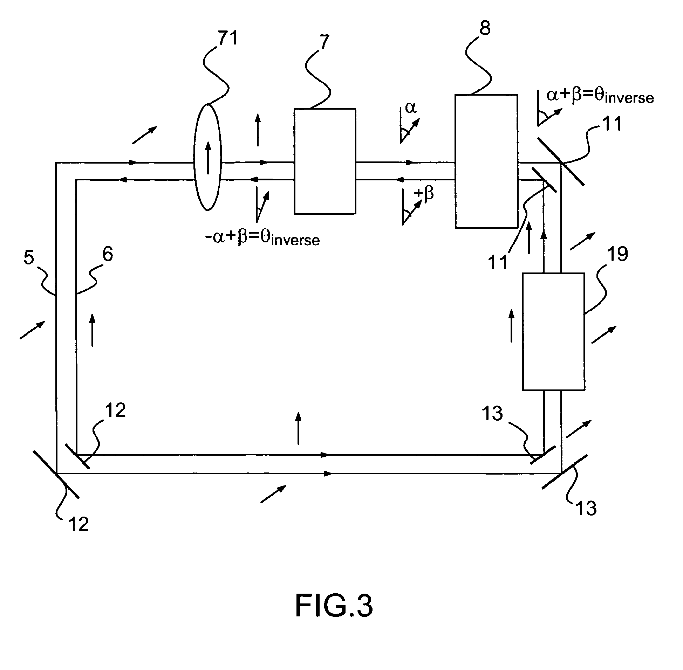

Le principe de la combinaison d'un effet optique réciproque et d'un effet optique non réciproque est illustré sur l'exemple de la figure 3 dans le cas où les effets réciproques et non réciproques sont simplement des rotations de la polarisation linéaire. Le schéma de cette figure représente une cavité en anneau dans laquelle peuvent circuler deux faisceaux optiques contre-propageants 5 et 6. Pour plus de clarté, on a séparé les trajets effectués par les deux faisceaux 5 et 6 bien qu'ils parcourent le même trajet en sens inverse. La boucle extérieure, sur laquelle le sens du trajet est représenté par des premières flèches, représente le trajet effectué par le premier faisceau 5 et la boucle intérieure, sur laquelle le sens du trajet est représenté par des flèches orientées dans le sens inverses des premières flèches, représente le trajet effectué par le deuxième faisceau 6. On a également représenté par des vecteurs la polarisation des faisceaux sur leurs trajets respectifs. Cette cavité comporte, entre autres, un ensemble optique constitué d'un polariseur linéaire 71, d'un premier élément à effet réciproque 7 agissant sur la direction de polarisation de la lumière polarisée linéairement et d'un second élément à effet non réciproque 8 agissant également sur la direction de la polarisation de la lumière. Le premier élément 7 fait tourner la polarisation de la lumière d'un angle $\alpha$ dans le sens direct et le second élément 8 fait tourner la polarisation d'un angle $\beta$ également dans le sens direct. Soit un premier faisceau optique 5 polarisé linéairement par le polariseur linéaire 71 et traversant successivement le premier et le second élément, après la traversée du premier élément, sa direction de polarisation a tourné d'un angle $\alpha$ et, après la traversée du second élément, sa direction de polarisation a tourné d'un angle $\theta_{direct}$ égal à $\alpha+\beta$.

Soit un second faisceau optique 6 polarisé linéairement et traversant successivement en sens opposé par rapport au premier faisceau 5 le second puis le premier élément, après la traversée du second élément, sa direction de polarisation a tourné d'un angle β et, après la traversée du premier élément, sa direction de polarisation a tourné d'un angle $\theta_{inverse}$ égal à $-\alpha+\beta$.

Un effet collatéral du dispositif de stabilisation des intensités est qu'il conduit à une légère séparation des états de polarisation des deux modes contre-propageants sur une partie du trajet qu'ils parcourent dans la cavité ce qui a pour effet de les rendre sensible à la biréfringence de la cavité. La biréfringence de la cavité est par exemple due à la présence de matériaux biréfringents comme le milieu amplificateur 19. Un milieu amplificateur 19 est biréfringent s'il renferme par exemple des contraintes mécaniques ou thermiques résiduelles qui rendent le matériau anisotrope.

La biréfringence de la cavité peut en outre venir de la présence de miroirs 11, 12, 13 imparfaits, c'est-à-dire qui induisent un déphasage entre deux faisceaux incidents dont les polarisations présentent des orientations respectives différentes par rapport au plans s (plan perpendiculaire au plan d'incidence) et au plan p (plan d'incidence). Les rayons subissent alors un indice de réfraction différent lorsqu'ils ont une polarisation différente.

Dans un milieu biréfringent, l'indice de réfraction n'est pas unique, il dépend des directions de propagation et de polarisation du rayon lumineux. On sait que lorsqu'un faisceau optique traverse un matériau réfringent de longueur d d'indice n, tout se passe comme si le faisceau optique parcourait une longueur effective deff vérifiant :

$$deff = n*d$$

Si deux faisceaux optiques présentent une direction de polarisation différente lorsqu'ils traversent ou sont réfléchis par un matériau biréfringent, ils voient un indice de réfraction différent et parcourent par conséquent une longueur effective différente.

Etant donné que dans la cavité du gyrolaser selon l'invention, la polarisation des faisceaux contre-propageants est différente au sein de la cavité, notamment au niveau des miroirs 11, 12, 13 et de l'amplificateur 19, on comprend que la biréfringence dans la cavité laser induit une deuxième différence de longueur effective de parcours ΔLb entre les faisceaux optiques contre-propageants (la première étant due à l'effet Sagnac) lorsque le gyrolaser est équipé d'un dispositif de stabilisation des intensités 30.

Or, selon l'équation B, une deuxième différence de longueur effective de parcours des deux faisceaux optiques induit une deuxième différence de fréquence entre ces deux faisceaux vérifiant :

$$\Delta Lb = \frac{\Delta \upsilon bL}{\upsilon} = \frac{\Delta \upsilon b}{pc}$$

où Δvb est la deuxième différence de fréquence entre les faisceaux optiques contre-propageants, à savoir le biais en fréquence induit par la biréfringence de la cavité.

Par conséquent, lorsque l'on mesure la différence de fréquence Δvmes entre les deux faisceaux contre-propageants avec le moyen 3, il s'agit de la somme de la différence de fréquence induite par les matériaux biréfringents et de la différence de fréquence induite par l'effet Sagnac.

$$\Delta vmes = \Delta vb + \Delta vs$$

Si la mesure de rotation du gyrolaser est obtenue en calculant directement la vitesse de rotation Ω du gyrolaser à partir de la différence de fréquence mesurée et de l'équation A, la vitesse de rotation calculée est biaisée à cause de la biréfringence de la cavité.

Le déplacement angulaire relatif IΩ calculé à partir du comptage des franges présente ainsi également un biais en déplacement angulaire ΔIΩb induit par le biais en fréquence induit par le dispositif de stabilisation des intensités 30. En outre, le biais en fréquence Δvb varie en fonction du courant délivré par le dispositif de contre-réaction pour stabiliser les intensités des modes contra-propageants. Ce biais est donc une source importante de dégradation des performances du gyrolaser à état solide de l'art antérieur sur les mesures de rotation effectuées par le gyrolaser.

Afin d'améliorer les performances des gyrolasers à état solide, le gyrolaser selon l'invention comprend un dispositif 40 de compensation du biais induit par le dispositif 30 de compensation des intensités. Ce dispositif est un dispositif de compensation du biais induit par la biréfringence de la cavité du fait de la présence du dispositif de stabilisation des intensités. Ainsi, ce dispositif comprend un moyen 25 pour compenser le biais induit par la biréfringence de la cavité sur la mesure de rotation effectuée le moyen 3.

La demanderesse a constaté que le biais en fréquence Δvb induit par le dispositif de compensation dépend de la commande Co de pilotage envoyée par le module électronique de contre-réaction 4 au dispositif à effet variable.

Le dispositif à effet variable est soit le dispositif à effet non réciproque 8 soit le dispositif à effet réciproque 7. Pour réaliser un dispositif à effet réciproque variable, une solution possible consiste à utiliser un dispositif à biréfringence contrôlable au moyen d'une commande en tension. La commande générée par le module électronique de contre-réaction est une commande en tension qui dépend de la différence d'intensité entre les deux modes contre-propageants.

Pour réaliser un dispositif à effet non-réciproque variable, une solution consiste à utiliser des dispositifs magnéto-optiques, par exemple à effet Faraday, qui nécessitent pour fonctionner un champ magnétique et à faire varier le champ magnétique, par exemple au moyen d'une bobine d'induction entourant le matériau à effet Faraday. Le module électronique de contre-réaction établit une commande en courant dépendant de la différence d'intensité entre les faisceaux contra-propageant.

Lorsque le dispositif à effet variable est le dispositif à effet non réciproque, le moyen 23 pour mesurer la commande de réglage est un moyen de mesure de courant. Le moyen de mesure du courant mesure, de préférence, le courant avec une erreur inférieure ou égale à $10^{-4}$ en valeur relative. L'erreur en valeur relative est égale à l'erreur de mesure rapportée sur la valeur mesurée. Une telle mesure est effectuée avec des moyens de mesure classique de l'intensité, par exemple avec un moyen de mesure de la tension aux bornes d'une résistance connue. Le signal ainsi mesuré pourra être analogique ou numérique.

Lorsque le dispositif à effet variable est le dispositif à effet réciproque, le moyen 23 pour mesurer la commande de réglage est un moyen de mesure de tension. Le moyen de mesure de tension mesure, de préférence, la tension avec une erreur inférieure ou égale à $10^{-4}$ en valeur relative. Les moyens de mesure classique de la tension du type voltmètre permettent d'accéder à ce type de précision.

En effet, un gyrolaser est dit "gyrolaser Hautes Performances" lorsque la dérive du biais existant sur la mesure du déplacement angulaire du gyrolaser est inférieure ou égale à 1/100 degrés par heure. Lorsqu'on compense le biais, on ne doit pas induire une dérive supérieure à 1/100 degrés par heure. Pour cela, la mesure sur la commande de réglage doit présenter une erreur relative inférieure ou égale à $10^{-4}$.

On va maintenant décrire plus précisément le dispositif 40 de compensation du biais induit par le dispositif stabilisateur sur un gyrolaser à état solide selon l'invention.

Ce dispositif comprend un moyen 21 pour mémoriser un modèle Mo de comportement du biais en fréquence $\Delta vb$ induit par le dispositif de stabilisation des intensités en fonction de la commande de réglage Co. Par ailleurs, le gyrolaser comprend un moyen 22 pour calculer le biais en fréquence $\Delta vb$ induit par le dispositif de stabilisation des intensités à partir de la commande de réglage Co et du modèle Mo, un moyen 24 pour calculer le biais induit sur la mesure de rotation effectuée par le moyen 3 ainsi qu'un moyen 25 pour compenser le biais induit par la biréfringence de la cavité de sorte que la mesure de sortie $\Omega s$ ou $I\Omega s$ du gyrolaser est une mesure de la rotation du gyrolaser dans laquelle le biais induit par le dispositif de compensation des intensités a été corrigé. Le moyen 22 pour calculer le biais en fréquence induit par le dispositif de stabilisation des intensités calcule un biais en fréquence $\Delta vb$ à partir de la valeur de la commande de réglage Co mesurée par le moyen 23 pour mesurer la commande de réglage Co et d'un modèle Mo de comportement du biais en fonction de la commande de réglage Co.

Le modèle Mo est par exemple constitué d'une table répertoriant la valeur du biais pour une pluralité de valeurs de la commande de réglage Co. En variante, le modèle correspond à un modèle établi à partir des tables en approximant le comportement du biais en fonction de la commande de réglage. Par exemple, le modèle de comportement du biais peut être un modèle linéaire.

Une table correspondant à un modèle Mo de comportement du biais en fréquence est établie en usine par une procédure de calibration classique.

Le moyen 24 calcule, à partir du biais en fréquence, le biais $\Delta\Omega b$ ou $\Delta I\Omega b$ sur la mesure de rotation du gyrolaser.

Dans l'exemple où le moyen 3 pour calculer une mesure de rotation calcule une mesure de vitesse angulaire $\Omega$, le moyen 24 convertit ce biais en fréquence $\Delta vb$ en un biais en vitesse angulaire $\Delta\Omega b$ à partir de l'équation A.

Dans l'exemple d'une mesure de rotation en déplacement angulaire relatif $I\Omega$, la mesure du biais en vitesse angulaire $\Delta\Omega b$ est en outre intégrée dans le temps pour donner un biais en déplacement angulaire $\Delta I\Omega b$.

A titre d'exemple non limitatif, pour une valeur typique de séparation des polarisations de 0,1 mrad et un déphasage typique entre les plans s et p d'un miroir de l'ordre de 1 degré, le biais en vitesse de rotation est de l'ordre de 1 00deg/h.

Le moyen 25 pour compenser le biais induit par le dispositif de stabilisation des intensités soustrait le biais sur la mesure de rotation en vitesse de rotation $\Delta\Omega b$, respectivement en déplacement angulaire relatif $\Delta I\Omega b$, à la mesure de vitesse rotation $\Omega$, respectivement au déplacement angulaire relatif $I\Omega$, de sorte à obtenir une mesure de rotation de sortie S qui est une vitesse de rotation compensée Qs, respectivement un déplacement angulaire relatif compensé $I\Omega s$.

L'ensemble formé par les moyens 3, 21, 22, 23, 24 et 25 est un moyen pour calculer une mesure de rotation de sortie du gyrolaser à partir des modes contre-propageants. Cette mesure de rotation de sortie est une mesure de rotation compensée, c'est-à-dire dans laquelle au moins une partie du biais induit par le dispositif de stabilisation des intensités est corrigé.

Dans un mode de réalisation préféré de l'invention, on affine le modèle de correction du biais induit par le dispositif de stabilisation des intensités à l'aide d'un ou plusieurs capteurs de température disposés dans la cavité laser. Une variation de la température de la cavité peut par exemple induire une dilatation ou une rétraction du matériau Faraday utilisé, changeant ainsi la valeur de la rotation non-réciproque donc du biais.

A cet effet, le gyrolaser selon l'invention comprend un moyen de mesure de la température en un ou plusieurs points de la cavité comprenant un ou plusieurs moyens de mesure de la température en des points respectifs de la cavité. Le modèle de comportement du biais en fréquence en fonction de la commande de réglage est en outre fonction de la température de la cavité.

De préférence, le moyen de mesure de la température mesure la température avec une erreur inférieure à 5°C. Les capteurs classiques de températures sont aptes à fournir une telle précision. De tels capteurs sont couramment utilisés sur les dispositifs de navigation inertielle (gyrolasers à gaz notamment De cette manière, on peut proposer un gyrolaser à état solide dit "Hautes Performances."

On améliore ainsi les performances inertielles d'un gyrolaser à état solide équipé d'un dispositif de stabilisation des intensités utilisant un dispositif à effet de rotation réciproque, un dispositif à effet de rotation non-réciproque et un polariseur.

Les moyens de calcul décrits dans la demande de brevet sont, par exemple, des moyens de calcul numériques du type logiciel ("software") ou du type matériel ("hardware").

## Revendications

1. Gyrolaser (100) à état solide comportant au moins une cavité optique (1) dans lequel deux modes optiques (5, 6) dits contre-propageants peuvent se propager en sens inverse l'un de l'autre, un dispositif (30) de stabilisation des intensités permettant de maintenir l'équilibre des deux modes contre-propageants comportant au moins, à l'intérieur de la cavité, un ensemble optique comprenant un élément polarisant (71), un dispositif à effet non réciproque (8) agissant sur l'état de polarisation des modes contre-propageants, un dispositif à effet réciproque (7) agissant également sur l'état de polarisation des modes contre-propageants, le dispositif (30) de stabilisation des intensités comportant des moyens de réglage (4) permettant, en établissant une commande de réglage (Co), de régler au moins l'un des effets desdits dispositifs à effet réciproque (7) ou à effet non réciproque (8), ledit gyrolaser comprenant en outre un moyen (3) de calcul d'une mesure de rotation $(\Omega, I\Omega)$ dudit gyrolaser à partir des modes optiques dits contre-propageants présentant entre eux une différence de fréquence $(\Delta vmes)$, le moyen (3) de calcul d'une mesure de rotation $(\Omega, I\Omega)$ calculant une mesure de rotation $(\Omega, I\Omega)$ en supposant que la différence de fréquence $(\Delta vmes)$ entre les deux modes contre-propageants est induite uniquement par la rotation de la cavité, **caractérisé en ce qu'**il comprend en outre :

   - un moyen (23) pour mesurer la commande de réglage (Co),
   - un moyen (21) pour mémoriser un modèle (Mo) de comportement d'un biais en fréquence $(\Delta vb)$

   induit par le dispositif (30) de stabilisation des intensités en fonction de la commande de réglage (Co),
   - un moyen (22) pour calculer le biais en fréquence $(\Delta vb)$ induit par le dispositif (30) de stabilisation des intensités à partir de la valeur de la commande de réglage (Co) et du modèle (Mo),
   - un moyen (24) pour calculer le biais $(\Delta\Omega b, \Delta I\Omega b)$ sur la mesure de rotation $(\Omega, I\Omega)$ induit par le biais en fréquence $(\Delta vb)$,
   - un moyen (25) pour compenser le biais $(\Delta\Omega b, \Delta I\Omega b)$ sur la mesure de rotation $(\Omega, I\Omega)$.

2. Gyrolaser (100) à état solide selon la revendication précédente, **caractérisé en ce que** la mesure de rotation est une mesure de du déplacement angulaire relatif dudit gyrolaser.

3. Gyrolaser (100) à état solide selon la revendication 1, **caractérisé en ce que** la mesure de rotation est une mesure de la vitesse de rotation $(\Omega)$ dudit gyrolaser.

4. Gyrolaser (100) à état solide selon l'une quelconque des revendications précédentes, **caractérisé en ce que** le modèle (Mo) de comportement du biais en fréquence en fonction de la commande de réglage (Co) est un modèle linéaire.

5. Gyrolaser (100) à état solide selon l'une quelconque des revendications 1 à 3, **caractérisé en ce que** le modèle de comportement du biais (Mo) en fonction de la commande de réglage est une table répertoriant une pluralité de valeurs du biais en fréquence en fonction de la valeur de la commande de réglage (Co).

6. Gyrolaser (100) à état solide selon l'une quelconque des revendications précédentes, **caractérisé en ce qu'**il comprend en outre un moyen pour mesurer la température en au moins un point de la cavité.

7. Gyrolaser (100) à état solide selon la revendication précédente, **caractérisé en ce que** le moyen pour mesurer la température est apte à mesurer une température avec une erreur inférieure à 5°C.

8. Gyrolaser (100) à état solide selon l'une quelconque des revendications 6 à 7, **caractérisé en ce que** le modèle (Mo) est en outre fonction de la température en un ou plusieurs points de la cavité.

9. Gyrolaser (100) à état solide selon l'une quelconque des revendications précédentes, **caractérisé en ce que** le moyen (23) pour mesurer la commande de réglage (Co) mesure la commande de réglage avec une erreur relative inférieure ou égale à $10^{-4}$

**10.** Gyrolaser (100) à état solide selon l'une quelconque des revendications précédentes, **caractérisé en ce que** le moyen (23) pour mesurer la commande de réglage est un moyen de mesure d'une intensité.

**11.** Gyrolaser (100) à état solide selon l'une quelconque des revendications 1 à 9 **caractérisé en ce que** le moyen (23) pour mesurer la commande de réglage est un moyen de mesure d'une tension.

**Claims**

**1.** A solid-state gyrolaser (100) comprising at least one optical cavity (1) in which two optical modes (5, 6), referred to as counter-propagating modes, can propagate in opposite directions to each other, a device (30) for stabilising intensities so as to maintain a balance between the two counter-propagating modes comprising, inside the cavity, at least one optical assembly that comprises a polarising element (71), a non-reciprocal effect device (8) acting on the polarisation state of the counter-propagating modes, a reciprocal effect device (7) also acting on the polarisation state of the counter-propagating modes, the device (30) for stabilising intensities comprising adjustment means (4) for adjusting, by providing an adjustment command (Co), at least one of the effects of said reciprocal effect (7) or said non-reciprocal effect (8) devices, said gyrolaser further comprising a means (3) for calculating a rotation measurement ($\Omega$, I$\Omega$) of said gyrolaser on the basis of the optical modes, referred to as counter-propagating modes, having a frequency difference ($\Delta$vmes) between them, the means (3) for calculating a rotation measurement ($\Omega$, I$\Omega$) calculating a rotation measurement ($\Omega$, I$\Omega$) by assuming that the frequency difference ($\Delta$vmes) between the two counter-propagating modes is only induced by the rotation of the cavity, **characterised in that** it further comprises:

- a means (23) for measuring the adjustment command (Co),
- a means (21) for storing a behaviour model (Mo) of a frequency bias ($\Delta$vb) induced by the device (30) for stabilising intensities as a function of the adjustment command (Co),
- a means (22) for calculating the frequency bias ($\Delta$vb) induced by the device (30) for stabilising intensities on the basis of the value of the adjustment command (Co) and of the model (Mo),
- a means (24) for calculating the bias ($\Delta\Omega$b, $\Delta$I$\Omega$b) on the rotation measurement ($\Omega$, I$\Omega$) induced by the frequency bias ($\Delta$vb),
- a means (25) for compensating the bias ($\Delta\Omega$b, $\Delta$I$\Omega$b) on the rotation measurement ($\Omega$, I$\Omega$).

**2.** The solid-state gyrolaser (100) according to the preceding claim, **characterised in that** the rotation measurement is a measurement of the relative angular displacement of said gyrolaser.

**3.** The solid-state gyrolaser (100) according to claim 1, **characterised in that** the rotation measurement is a measurement of the rotation speed ($\Omega$) of said gyrolaser.

**4.** The solid-state gyrolaser (100) according to any one of the preceding claims, **characterised in that** the behaviour model (Mo) of the frequency bias as a function of the adjustment command (Co) is a linear model.

**5.** The solid-state gyrolaser (100) according to any one of claims 1 to 3, **characterised in that** the behaviour model (Mo) of the bias as a function of the adjustment command is a table that lists a plurality of values of the frequency bias as a function of the value of the adjustment command (Co).

**6.** The solid-state gyrolaser (100) according to any one of the preceding claims, **characterised in that** it further comprises a means for measuring the temperature on at least one point of the cavity.

**7.** The solid-state gyrolaser (100) according to the preceding claim, **characterised in that** the means for measuring the temperature is designed to measure a temperature with an error of less than 5°C.

**8.** The solid-state gyrolaser (100) according to any one of claims 6 to 7, **characterised in that** the model (Mo) is also a function of the temperature at one or more points of the cavity.

**9.** The solid-state gyrolaser (100) according to any one of the preceding claims, **characterised in that** the means (23) for measuring the adjustment command (Co) measures the adjustment command with a relative error that is less than or equal to $10^{-4}$.

**10.** The solid-state gyrolaser (100) according to any one of the preceding claims, **characterised in that** the means (23) for measuring the adjustment command is a means for measuring an intensity.

**11.** The solid-state gyrolaser (100) according to any one of claims 1 to 9, **characterised in that** the means (23) for measuring the adjustment command is a means for measuring a voltage.

**Patentansprüche**

**1.** Festkörperlaserkreisel (100), der Folgendes umfasst: wenigstens einen optischen Hohlraum (1), in dem sich zwei optische Moden (5, 6), gegenläufige Ausbreitungsmoden genannt, in Gegenrichtung zueinander ausbreiten können, eine Vorrichtung (30) zum Stabilisieren der Intensitäten, so dass die beiden gegenläufigen Ausbreitungsmoden im Gleichgewicht gehalten werden können, die im Innern des Hohlraums wenigstens eine optische Baugruppe mit einem Polarisationselement (71) aufweist, eine Vorrichtung mit nicht reziprokem Effekt (8), die auf den Polarisationszustand der gegenläufigen Ausbreitungsmoden einwirkt, eine Vorrichtung mit reziprokem Effekt (7), die ebenfalls auf den Polarisationszustand der gegenläufigen Ausbreitungsmoden einwirkt, wobei die Vorrichtung (30) zum Stabilisieren der Intensitäten Einstellmittel (4) aufweist, die durch die Erstellung eines Einstellbefehls (Co) zulassen, wenigstens einen der Effekte der Vorrichtung mit reziprokem Effekt (7) oder der mit nicht-reziprokem Effekt (8) einzustellen, wobei der Laserkreisel darüber hinaus ein Mittel (3) zum Berechnen eines Rotationsmesswerts (Ω, IΩ) des Laserkreisels anhand der gegenläufige optische Ausbreitungsmoden genannten optischen Moden aufweist, die eine Frequenzdifferenz (Δvmes) zueinander haben, wobei das Mittel (3) zum Berechnen eines Rotationsmesswertes (Ω, IΩ) einen Rotationsmesswert (Ω, IΩ) unter der Annahme berechnet, dass die Frequenzdifferenz (Δvmes) zwischen den beiden gegenläufigen Ausbreitungsmoden nur durch die Rotation des Hohlraums induziert wird, **dadurch gekennzeichnet, dass** er darüber hinaus Folgendes umfasst:

    - ein Mittel (23) zum Messen des Einstellbefehls (Co),
    - ein Mittel (21) zum Speichern eines Verhaltensmodells (Mo) eines Frequenz-Bias (Δvb), der durch die Vorrichtung (30) zum Stabilisieren der Intensitäten induziert wird, in Abhängigkeit von dem Einstellbefehl (Co),
    - ein Mittel (22) zum Berechnen des durch die Vorrichtung (30) zum Stabilisieren der Intensitäten induzierten Frequenz-Bias (Δvb) anhand des Wertes des Einstellbefehls (Co) und des Modells (Mo),
    - ein Mittel (24) zum Berechnen des Bias (ΔΩb, ΔIΩb) an dem durch den Frequenz-Bias (Δvb) induzierten Rotationsmesswert (Ω, IΩ),
    - ein Mittel (25) zum Kompensieren des Bias (ΔΩb, ΔIΩb) an dem Rotationsmesswert (Ω, IΩ).

2. Festkörperlaserkreisel (100) nach dem vorherigen Anspruch, **dadurch gekennzeichnet, dass** der Rotationsmesswert ein Messwert für die relative Winkelverschiebung des Laserkreisels ist.

3. Festkörperlaserkreisel (100) nach Anspruch 1, **dadurch gekennzeichnet, dass** der Rotationsmesswert ein Messwert für die Rotationsgeschwindigkeit (Ω) des Laserkreisels ist.

4. Festkörperlaserkreisel (100) nach einem der vorherigen Ansprüche, **dadurch gekennzeichnet, dass** das Verhaltensmodell (Mo) des Frequenz-Bias in Abhängigkeit von dem Einstellbefehl (Co) ein lineares Modell ist.

5. Festkörperlaserkreisel (100) nach einem der Ansprüche 1 bis 3, **dadurch gekennzeichnet, dass** das Verhaltensmodell des Bias (Mo) in Abhängigkeit vom Einstellbefehl eine Tabelle ist, in der mehrere Werte des Frequenz-Bias in Abhängigkeit vom Wert des Einstellbefehls (Co) aufgeführt sind.

6. Festkörperlaserkreisel (100) nach einem der vorherigen Ansprüche, **dadurch gekennzeichnet, dass** er darüber hinaus ein Mittel zum Messen der Temperatur an wenigstens einem Punkt des Hohlraums umfasst.

7. Festkörperlaserkreisel (100) nach dem vorherigen Anspruch, **dadurch gekennzeichnet, dass** das Temperaturmessmittel eine Temperatur mit einem Fehler von weniger als 5°C messen kann.

8. Festkörperlaserkreisel (100) nach einem der Ansprüche 6 bis 7, **dadurch gekennzeichnet, dass** das Modell (Mo) darüber hinaus von der Temperatur an einem oder mehreren Punkten des Hohlraums abhängig ist.

9. Festkörperlaserkreisel (100) nach einem der vorherigen Ansprüche, **dadurch gekennzeichnet, dass** das Mittel (23) zum Messen des Einstellbefehls (Co) den Einstellbefehl mit einem relativen Fehler von gleich oder weniger als $10^{-4}$ misst.

10. Festkörperlaserkreisel (100) nach einem der vorherigen Ansprüche, **dadurch gekennzeichnet, dass** das Mittel (23) zum Messen des Einstellbefehls ein Mittel zum Messen einer Intensität ist.

11. Festkörperlaserkreisel (100) nach einem der Ansprüche 1 bis 9, **dadurch gekennzeichnet, dass** das Mittel (23) zum Messen des Einstellbefehls ein Mittel zum Messen einer Spannung ist.

FIG.1

FIG.2

FIG.3

**RÉFÉRENCES CITÉES DANS LA DESCRIPTION**

**Documents brevets cités dans la description**

* FR 0303645